# EUROPEAN PATENT SPECIFICATION

(11) **EP 1 581 417 B1**
(45) Date of publication and mention of the grant of the patent: **22.11.2006**
(21) Application number: 03786452.7
(22) Date of filing: 23.12.2003
(51) Int. Cl.: B60T 7/08, B60T 11/00

(54) **DEVICE OF A BRAKE SYSTEM**
VORRICHTUNG EINES BREMSSYSTEMS
DISPOSITIF POUR SYSTEME DE FREINAGE DE STATIONNEMENT DEPENDANT DU SYSTEME D'ALLUMAGE

(30) Priority: 23.12.2002 NO 20026230
(43) Date of publication of application: 05.10.2005
(73) Proprietor: Vik, Per Espen, 5394 Kolbeinsvik (NO); Vik, Lars Eivind, 5394 Vinnevag (NO)
(72) Inventor: Vik, Per Espen, 5394 Kolbeinsvik (NO); Vik, Lars Eivind, 5394 Vinnevag (NO)
(74) Representative: van Westenbrugge, Andries
(86) International application number: PCT/NO2003/000439
(87) International publication number: WO 2004/056629

(56) References cited:
- DE-C1- 3 921 507
- GB-A- 451 256
- US-A- 5 624 352
- US-A1- 2001 020 377

## Description

The present invention relates to a device of a parking brake system for vehicles, said parking brake comprises a brake lever that can reset the brake system between an active brake position and a neutral position, and also a transmission mechanism to make it possible to reset the brake lever from the brake position, as the mentioned operation of the transmission mechanism is dependent on the ignition system of the vehicle being activated/turned on.

There are previously known solutions where the use of a parking brake is controlled by the electrical system of a vehicle, and reference is made to US Patents 4,519,653, 5,134,764 and 5,624,352. However, these solutions are not related to the use of a brake lever.

Patent DE 3921507 C1 discloses a braking system which is controlled by the electrical system of a vehicle and comprises a brake lever. The braking system has a complex structure with many moving parts.

It is an aim of the invention to provide a new solution for the operation of a brake lever.

The aim of the invention is primarily to be able to safeguard the vehicle against unintended use by providing a device that influences the use of the parking brake of the vehicle, for example, as a result of an accident.

Thus, it is an aim of the present invention to provide a new device which has a simple construction and that shall be able to prevent the handbrake of a vehicle being unintentionally released. Such a release can be due to a person trying to steal the car.

It is also an aim of the invention to be able to prevent children being able to release the parking brake so that the vehicle starts to roll.

Most cars have their own parking brake system in the form of a separate drum-brake that operates on the back wheels, but it can also be formed in other ways. This brake system is constructed completely independently of the car's main brake system, and is only intended for use when the car is parked, but it is also used as an emergency brake.

A parking brake can also comprise a handbrake, as it is formed as a lever that is operated by the driver's hand. The brake lever is either placed in the dashboard and is pulled out to a position where a locking pin locks the lever, or it is placed between the front seats and the brake is activated by it being pulled up.

The device according to the present invention comprises a blocking appliance with a blocking peg that is in blocking engagement with the transmission mechanism when the appliance is not supplied with a voltage from the ignition system, and disengages from the blocking position with the mechanism when the appliance is supplied with a voltage, and is characterised in that the transmission mechanism is formed by an extending rod that comprises a recess or notch which can accommodate the locking pin when this is activated to the locking position of the brake.

The preferred embodiment of the invention appears in the subsequent claims 2-9.

According to the invention, the device is applied in a vehicle where the hand-operated lever is arranged to be pulled in the longitudinal direction between the two positions, or to be rotated around a fulcrum between the two positions.

The invention shall be explained in the following in connection with the latter solution with a retractable handbrake lever placed between the seats. Thus., reference shall be made to the following figures, in which:
Figure 1 shows the standard system for a parking brake of a vehicle.
Figure 2 shows an enlarged side perspective of the inventive locking appliance in neutral position. The magnetic field coil is here applied with a voltage and the locking pin is disengaged from the locking position.
Figure 3 shows an enlarged side perspective of the inventive locking appliance in its relaxed position. Here, a voltage is not applied to the magnetic field coil and the locking pin is in its normal position. In this case the locking pin will prevent the use of the locking button.
Figure 4 shows the electrical connections for operation of the appliance according to the invention.
Figures 5 and 6 show the two different positions of the locking pin, and also the positions where the forward section 18 can push on the rear rod section 18b, and the other pin position where the pin blocks the displacement of the rod 18b by the rod 18a.

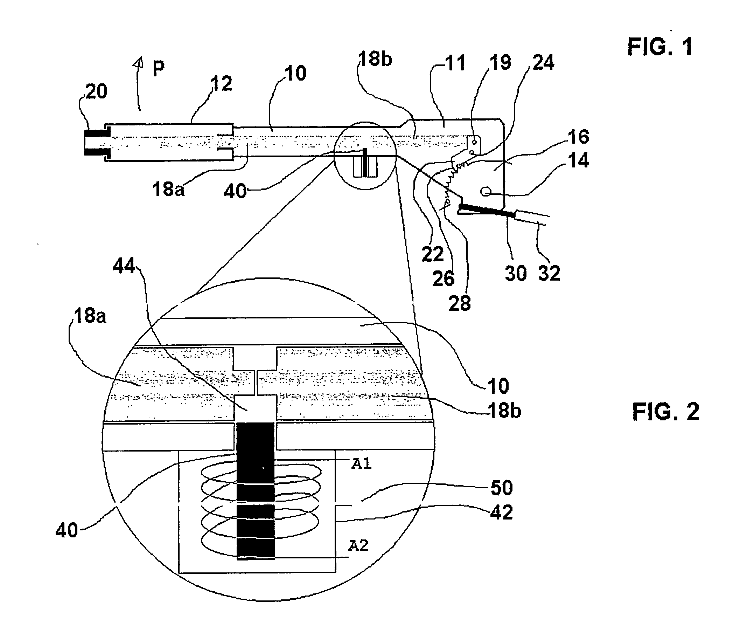

Initially, reference shall be made to figure 1 that illustrates a handbrake lever 10 which the driver can operate with his fingers gripping the forward handle section 12. At the rear, the lever 10 is rotary mounted in a fulcrum 14 in a base part 16 that is fixed to the floor of the vehicle (car).

A release rod 18 with a forward release button 20 runs alongside and freely inside the lever 10. The release rod 18 is divided in two with the forward rod section 18a running between the release button 20 and the locking pin 40 itself. A rear rod section 18b runs from the locking pin 40 and backwards. The forward and rear rod sections 18a, 18b are not connected to each other.

At the back, the rear rod section 18b is mounted at 19 in a locking catch 22 which is rotary mounted around an axis of rotation 24 in the rear frame part 11 of the lever 10 which, in the figure, lies outside the base part 16. The other end of the catch 22 comprises a locking peg 26 which can be brought into sequential engagement with correspondingly shaped notches/recesses 28 in the frame part 16. The catch 22 is spring loaded so that it is forced anti-clockwise so that the peg 26 falls down into the "nearest" notch 28. By the user pushing in the visible button 20 foremost on the lever 10 with the thumb, the locking peg of the catch 22 is flipped out of engagement in the base part 6 and the lever 12 can be pulled up in the direction of the arrow P.

The wire that operates the brake itself is shown by 30. It runs back to the brake drum/disk through the stocking 32. When the lever 10 is pulled up, simultaneously with the button 20 being depressed, the wire 30 is pulled forward and the brake is activated. When the button is released again, the peg 26 falls down into the nearest notch in the base. When the lever 10 is pulled up, it will be locked in this position.

In order to release the parking brake, the button 20 must be pushed in so that the peg 26 is pulled out of its engagement with the base 16.

According to a preferred embodiment, this parking brake construction is modified so that the catch element 22 can not be reset to a neutral position (where the peg 26 is released from the locking engagement) without the user/driver operating the ignition system of the vehicle.

Reference shall again be made to figure 1 that shows the abovementioned locking pin 40 arranged in a housing 42 in connection with the rod 10. The locking pin can be reset between two positions. In the one position the locking pin 40 is displaced in a blocking recess/notch 44 which is formed in an intermediate space between the forward and the rear rod sections 18a,b. The recess 44 is formed by a segment of the rear part of section 18a and the forward part of section 18b, respectively, being cut away, said recess can accommodate the locking pin 40 when it is activated into a position of locking the brake.

When the pin is in the recess 44, the button 20 can not be pushed in and the lever 10 remains standing in its locked position. However, this does not prevent rotation of the lever 10 in the pulling out direction (P). In the other position the locking pin 40 is pulled back and (forward section 18a off) the release rod 18 is free to be operated. The rear section 18b runs free all the time in relation to the locking pin.

The locking pin, with help of a pre-tension mechanism in the form of a spring connected to the housing is initially arranged to stand permanently in an upper locking position with the locking pin engaged with the locking notch 44 on the release rod 18.

The resetting of the locking pin 40 is carried out with the help of a magnetic field coil 50 that is wound around the locking pin 40 inside the housing 42. The two connecting contacts for the coil are denoted by A1 and A2, respectively. The magnetic field coil 50 is arranged to be supplied with electricity from the vehicle's electrical system. When the coil 50 is supplied with electricity, a magnetic field is created that pulls/pushes the pin 40 downwards and out of the engagement with the blocking notch 44. Then, the handbrake lever 10 can be moved freely and the brake is released when the button 20 is pushed in. The pin must either be of a robust design which withstands direct engagement in the locking groove, or the locking pin with associated mechanism, must be constructed so that the movement and power is transmitted to a separate mechanism that engages with the locking notch in the release rod.

The magnetic field coil (50), which is called a solenoid in English, will be supplied with a voltage across the connecting points, designated + and - (plus and minus), respectively, when a voltage (current with a voltage) is applied to the control relay (7) for the magnetic field coil (50). The control relay for the magnetic field coil gets a voltage when the car's ignition is switched on (K2 closes). The circuits are made safe with fuses as shown in the drawing (1F1, 2F1, 3F1 and 3F2). The voltage that is applied to the relays and the magnetic field coil is a direct current (DC).
The system is formed so that when the ignition system of the vehicle is turned off, the locking pin will stand in the upper locking position and prevent the power transmission between the button 20 and the catch construction 22. The ignition system of the vehicle must be turned on for it to be possible to pull out the locking pin, as the magnetic field coil is controlled by the car's electrical system. When the ignition system is activated, the pin is pulled out (downwards) and the handbrake can be released.

At the same time, it shall be possible to pull the handbrake and activate the brake independently of the position of the locking pin 40. Therefore, it is not necessary to activate the ignition system of the vehicle to pull the handbrake. Thus the locking pin is normally in a locking position when the magnetic field coil is not supplied with a voltage.

The reason that the release rod 18 is divided into two 18a,b is that the rear section 18b must be able to run freely because this will move according to the movements of the locking catch when the handbrake is pulled. The locking pin 40 shall, in its locked position (without voltage) prevent operation of the release button 20 by blocking the movement of the forward section 18a of the release rod 18a. The locking pin 40 does not prevent movement of the rear section of the release rod 18b, because this moves backwards and the locking pin 40 is placed in front.

The handbrake, as it is in today's cars, can be pulled without holding in the release button when pulling. Then one can hear the characteristic sound of the handbrake (the sound of the locking peg falling into each successive notch) In such cases, the release button and release rod will follow the movement of the locking peg and move for each notch the locking peg falls into.

The rear part of the release rod 18b will always follow the movement of the locking peg, while the forward part of the release rod 18a will only follow these movements when the locking pin 40 is out of locking position. One will hear the same sound from the handbrake when one pulls it, but if the locking pin 40 is in locking position one will experience that the release button does not move in step with the locking peg and the catch.

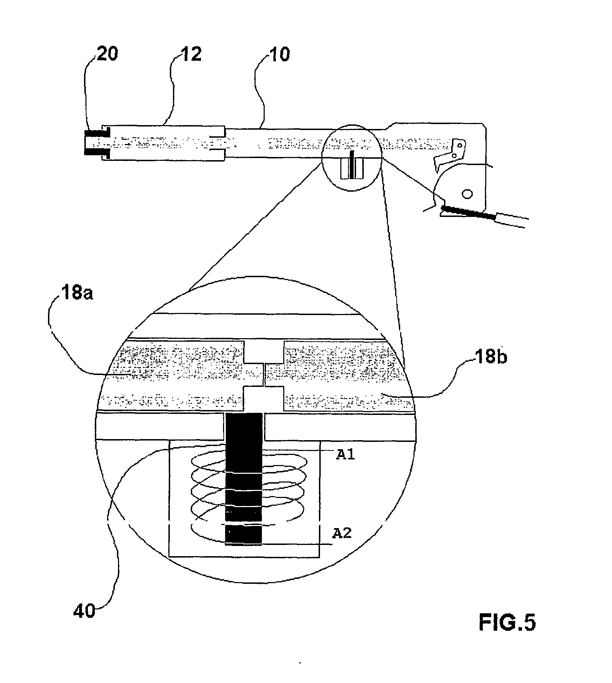

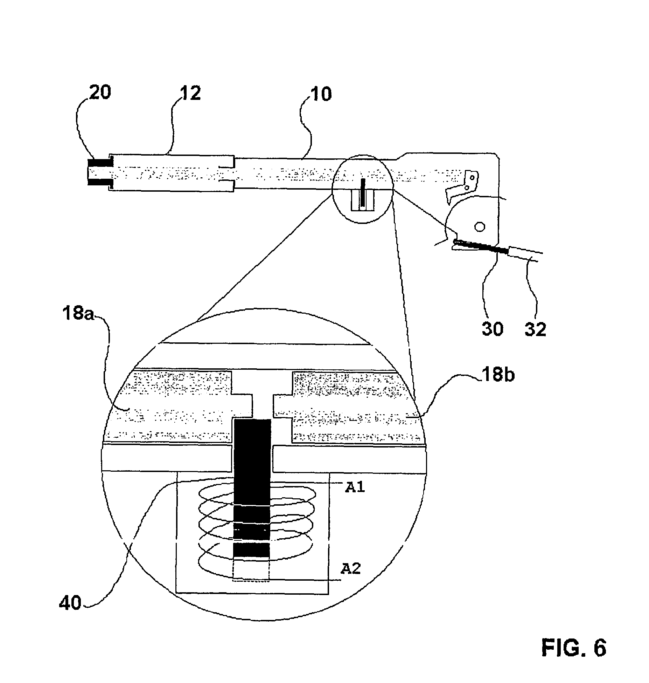

Figure 5 shows how the rod 18a impinges on the rod 18b and pushes this backwards, while figure 6 shows the rear rod section 18b being pulled backwards.

Figure 2 shows the situation where the ignition is turned on and the coil is supplied with a voltage so that the pin 40 is pulled out.

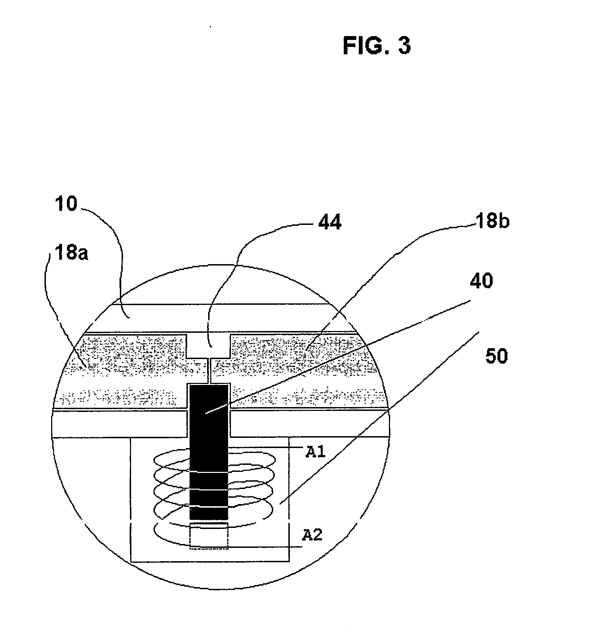

The situation where the ignition is turned off is shown in figure 3. No voltage is applied to the coil and the pin is pushed upwards in the groove (notch) 44 between the two rod sections 18a,b by the pre-tension.

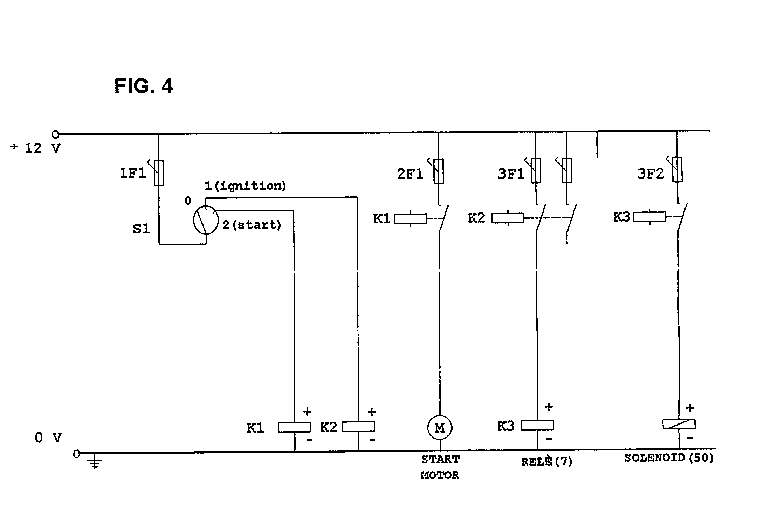

To illustrate how the connection can be made, reference shall be made to figure 4 which shows the central part of the ignition system. The figure shows the electrical circuit of the vehicle where the battery (12V) is connected to the ignition lock S1, the fuse system, the relays K1, K2, K3 (7) and the coil 50.

It can be seen in figure 4 that the car's ignition is not turned on and the magnetic field coil is thereby not activated either. If we assume that the handbrake is pulled up, the pin will be in the locked position. When the driver now puts the key in the ignition lock and turns it, the electrical circuit is activated, the coil is live and the pin 40 is pulled out and the handbrake can be released.

The fundamental principle for the present invention is that the electrical system must be connected for it to be possible to release the handbrake. The handbrake can be reset from a neutral position to a locked position independent of the ignition system being turned on, but not the other way round.

The description given here concerns a mechanical brake system, but it can, of course, be valid for all types of parking brake systems.

Furthermore, it is possible to use other release mechanisms than an electrically driven electromagnetic coil. Thus, air pressure systems or hydraulics can also be used to prevent the unintended release of the parking brake of a vehicle.

Today's technology implies that one must use, for example, the original car key or an "opening system", i.e. open the car's computer system, for it to be possible to turn on the ignition. In today's cars, one can not turn on the ignition by simply connecting wires underneath the dashboard or under the bonnet.

## Claims

1. Device for a parking brake system for vehicles, said parking brake comprises a brake lever that can reset the brake system between an active brake position and a neutral position, a transmission mechanism (18) to make it possible to reset the brake lever from the brake position, as the mentioned operation of the transmission mechanism (18) is dependent on the ignition system of the vehicle being activated/turned on, and also a blocking appliance with a blocking peg which is in blocking engagement with the transmission mechanism (18) when the appliance is not supplied with a voltage from the ignition system, and comes out of blocking engagement with the mechanism (18) when a voltage is applied to the appliance,
**characterised in that** the transmission mechanism is formed by an extended rod (18) that comprises a recess or notch (44) which can accommodate the locking pin (40) when this is activated to the locking position of the brake.

2. Device according to claim 1, **characterised in that** the blocking appliance comprises a magnetic field coil (50) which is wound round the locking pin (40), and when the magnetic field coil (50) is applied with a current from the ignition system, a magnetic field is formed that pulls or pushes the pin (40) out from its blocking engagement with the transmission mechanism (18).

3. Device according to claims 1-2,
**characterised in that** the magnetic field is arranged to act against a spring mechanism, said spring mechanism contributes to engage the locking pin (40) in the blocking notch (44) on the release rod (18) when a voltage is not applied to the coil.

4. Device according to claims 1-3,
**characterised in that** the magnetic field coil/solenoid (50) is supplied with a voltage when a control relay (7) for the magnetic field coil (50) is supplied with a voltage, said control relay gets a voltage when the car's ignition is turned on (K2 closes), said voltage which is applied to the relays and the magnetic field coil is a direct current (DC).

5. Device according to any of the preceding claims,
**characterised in that** the release rod (18) comprises a forward rod section (18a) and a rear rod section (18b), said rod sections (18a,18b) are not mutually connected, and the recess (44) is formed by a segment of the rear part of section (18a) and the forward part of section (18b), respectively, being cut away.

6. Device according to any of the preceding claims,
**characterised in that** the rear rod section (18b) is mounted in a locking catch (22) that, for the operation of the brake itself, is rotary mounted around an axis of rotation (24) in the rear frame part (11) of the lever/rod (10;18).

7. Device according to any of the preceding claims,
**characterised in that** the release rod is a hand-operated brake lever (10) which is arranged to be pulled in the longitudinal direction between the two positions, or to rotate around a fulcrum (14) between the two positions.

8. Device according to any of the preceding claims,
**characterised in that** the user operates the rod (18) by way of a push-button (20) in the one rod end.

9. Device according to any of the preceding claims,
**characterised in that** it is applied in connection with a brake lever that is placed in the dashboard and is pulled out to a position where a locking pin locks the lever, as the locking pin is controlled between blocking position and neutral position as given in the preceding claims.

## Patentansprüche

1. Vorrichtung für ein Feststellbremssystem für Fahrzeuge, wobei die Feststellbremse folgendes aufweist:
einen Bremshebel, der das Bremssystem zwischen einer aktiven Bremsstellung und einer neutralen Stellung umstellen kann,
einen Übertragungsmechanismus (18), um das Zurückstellen des Bremshebels aus der Bremsstellung zu ermöglichen, wobei die genannte Betätigung des Übertragungsmechanismus (18) davon abhängig ist, daß die Zündung des Fahrzeugs aktiviert/eingeschaltet ist, sowie
eine Blockiereinrichtung mit einem Blockierzapfen, der in Blockiereingriff mit dem Übertragungsmechanismus (18) steht, wenn der Blockiereinrichtung keine Spannung von der Zündung zugeführt wird, sowie aus dem Blockiereingriff mit dem Mechanismus (18) gelöst wird, wenn der Blockiereinrichtung eine Spannung zugeführt wird,
**dadurch gekennzeichnet,**
**daß** der Übertragungsmechanismus durch eine langgestreckte Stange (18) gebildet ist, die eine Vertiefung oder Kerbe (44) aufweist, die den Verriegelungsstift (40) aufnehmen kann, wenn dieser in die Verriegelungsposition der Bremse verbracht wird.

2. Vorrichtung nach Anspruch 1,
**dadurch gekennzeichnet,**
**daß** die Blockiereinrichtung eine Magnetfeldspule (50) aufweist, die um den Verriegelungsstift (40) gewickelt ist, und daß dann, wenn der Magnetfeldspule (50) elektrischer Strom von der Zündung zugeführt wird, ein Magnetfeld erzeugt wird, das den Stift (40) aus seinem Blockiereingriff mit dem Übertragungsmechanismus (18) herauszieht oder herausdrückt.

3. Vorrichtung nach Anspruch 1 oder 2,
**dadurch gekennzeichnet,**
**daß** das Magnetfeld dazu ausgebildet ist, gegen einen Federmechanismus zu wirken, und das der Federmechanismus dazu beiträgt, den Verriegelungsstift (40) mit der Blockierkerbe (44) in der Freigabestange (18) in Eingriff zu bringen, wenn der Spule keine Spannung zugeführt wird.

4. Vorrichtung nach einem der Ansprüche 1 bis 3,
**dadurch gekennzeichnet,**
**daß** der Magnetfeldspule / dem Elektromagneten (50) eine Spannung zugeführt wird, wenn einem Steuerrelais (7) für die Magnetfeldspule (50) eine Spannung zugeführt wird, wobei das Steuerrelais beim Einschalten der Zündung des Fahrzeugs mit einer Spannung beaufschlagt wird (K2 schließt), wobei es sich bei der dem Relais und der Magnetfeldspule zugeführten Spannung um einen Gleichstrom (DC) handelt.

5. Vorrichtung nach einem der vorhergehenden Ansprüche,
**dadurch gekennzeichnet,**
**daß** die Freigabestange (18) einen vorderen Stangenbereich (18a) und einen hinteren Stangenbereich (18b) aufweist, wobei die Stangenbereiche (18a, 18b) nicht miteinander verbunden sind, und daß die Vertiefung (44) **dadurch** gebildet ist, daß ein Segment des hinteren Teils des Bereichs (18a) bzw. des vorderen Teils des Bereichs (18b) weggeschnitten ist.

6. Vorrichtung nach einem der vorhergehenden Ansprüche,
**dadurch gekennzeichnet,**
**daß** der hintere Stangenbereich (18b) in einer Verriegelungsarretiereinrichtung (22) angebracht ist, die für den Betrieb der eigentlichen Bremse um eine Rotationsachse (24) in dem hinteren Rahmenteil (11) des Hebels /der Stange (10; 18) drehbar angebracht ist.

7. Vorrichtung nach einem der vorhergehenden Ansprüche,
**dadurch gekennzeichnet,**
**daß** es sich bei der Freigabestange um einen von Hand betätigbaren Bremshebel (10) handelt, der dazu ausgebildet ist, zwischen den beiden genannten Stellungen in Längsrichtung gezogen zu werden oder eine Rotationsbewegung (14) um einen Schwenkpunkt (14) zwischen den beiden Stellungen auszuführen.

8. Vorrichtung nach einem der vorhergehenden Ansprüche,
**dadurch gekennzeichnet,**
**daß** der Benutzer die Stange (18) mittels eines Druckknopfes (20) an dem einen Stangenende betätigt.

9. Vorrichtung nach einem der vorhergehenden Ansprüche,
**dadurch gekennzeichnet,**
**daß** sie in Verbindung mit einem Bremshebel verwendet wird, der an einem Armaturenbrett angeordnet ist und der in eine Position herausgezogen wird, in der ein Verriegelungsstift den Hebel verriegelt, wenn der Verriegelungsstift zwischen der Blockierstellung und der neutralen Stellung gemäß den vorhergehenden Ansprüchen gesteuert wird.

## Revendications

1. Dispositif pour système de frein à main de véhicules, le frein à main comprenant un levier de frein pour repositionner le système de frein entre une position de freinage actif et une position de point mort, un mécanisme de transmission (18) pour permettre de repositionner le levier de frein depuis la position de freinage, le fonctionnement du mécanisme de transmission (18) étant dépendant de l'état activé/allumé du système d'allumage du véhicule, et un appareil doté d'un ergot de blocage étant en engagement de blocage avec le mécanisme de transmission (18) lorsqu'il n'est pas alimenté par une tension du le système d'allumage, et sortant de l'engagement de blocage avec le mécanisme (18) lorsqu'une tension lui est appliqué,
**caractérisé en ce que**
le mécanisme de transmission est formé par une tringle elongeé (18) qui comprend une cavité ou encoche (44) qui peut recevoir la goupille de verrouillage (40) lorsque celle-ci est activée en position de verrouillage du frein.

2. Dispositif selon la revendication 1,
**caractérisé en ce que**
l'appareil de blocage comprend une bobine à champ magnétique (50) enroulée autour de la goupille de verrouillage (40), et lorsque la bobine à champ magnétique (50) reçoit un courant depuis le système d'allumage, un champ magnétique est formé, qui tire ou pousse la goupille (40) pour l'extraire de son engagement de blocage avec le mécanisme de transmission (18).

3. Dispositif selon les revendications 1 et 2,
**caractérisé en ce que**
le champ magnétique agit en opposition à un mécanisme de ressort, le mécanisme de ressort contribuant à engager la goupille de verrouillage (40) dans l'encoche de blocage (44) sur la tringle de rappel (18) lorsqu'une tension n'est pas appliquée à la bobine.

4. Dispositif selon les revendications 1 à 3,
**caractérisé en ce que**
la bobine à champ magnétique/solénoïde (50) est alimentée par une tension lorsqu'un relais de commande (7) pour la bobine à champ magnétique (50) est alimenté par une tension, le relais de commande recevant une tension lorsque l'allumage de la voiture est allumé (K2 se ferme), la tension qui est appliquée aux relais et à la bobine à champ magnétique est un courant continu (CC).

5. Dispositif selon l'une des revendications précédentes,
**caractérisé en ce que**
la tringle de rappel (18) comprend une section de tringle avant (18a) et une section de tringle arrière (18b), les sections de tringle (18a, 18b) n'étant pas connectées l'une à l'autre, et la cavité (44) étant formée par un segment découpé de la partie arrière de section (18a) et un segment découpé de la partie avant de section (18b).

6. Dispositif selon l'une des revendications précédentes,
**caractérisé en ce que**
la section de tringle arrière (18b) est montée dans un cran de verrouillage (22) qui, pour le fonctionnement du frein lui-même, est monté de manière rotative autour d'un axe de rotation (24) dans la partie de cadre arrière (11) du levier/tringle (10 ; 18).

7. Dispositif selon l'une des revendications précédentes,
**caractérisé en ce que**
la tringle de rappel est un levier de frein à main (10) agencé pour être tiré dans la direction longitudinale entre les deux positions, ou pour tourner autour d'un pivot (14) entre les deux positions.

8. Dispositif selon l'une des revendications précédentes,
**caractérisé en ce que**
l'utilisateur actionne la tringle (18) à l'aide d'un bouton poussoir (20) à l'extrémité de tringle.

9. Dispositif selon l'une des revendications précédentes,
**caractérisé en ce qu'**
il est appliqué en connexion à un levier de frein placé dans le tableau de bord et est soulevé jusqu'à une position dans laquelle une goupille verrouille le levier, puisque la goupille de verrouillage est commandée entre une position de blocage et une position de point mort comme mentionné dans les revendications précédentes.
